# FASCICULE DE BREVET EUROPEEN

(11) **EP 1 713 680 B1**
(45) Date de publication et mention de la délivrance du brevet: **02.04.2008**
(21) Numéro de dépôt: 05726344.4
(22) Date de dépôt: 04.02.2005
(51) Int. Cl.: B62D 6/00

(54) **PROCEDE ET SYSTEME D'AIDE AU BRAQUAGE DE ROUES DIRECTRICES DE VEHICULE AINSI EQUIPE**
VERFAHREN UND SYSTEM ZUR UNTERSTÜTZUNG DER LENKUNG VON GELENKTEN RÄDERN EINES SO AUSGESTATTETEN FAHRZEUGS
METHOD AND SYSTEM FOR ASSISTING THE STEERING OF STEERED WHEELS OF A VEHICLE THUS EQUIPPED

(30) Priorité: 06.02.2004 FR 0401180
(43) Date de publication de la demande: 25.10.2006
(73) Titulaire: Renault SAS, 92100 Boulogne Billancourt (FR)
(72) Inventeur: FAUQUEUX, Olivier, F-78600 Mesnil Le Roi (FR); AUVINET, Jannick, F-27000 Evreux (FR)
(86) Numéro de dépôt international: PCT/FR2005/050069
(87) Numéro de publication internationale: WO 2005/075277

(56) Documents cités:
- WO-A-03/022648
- DE-A- 4 120 069

## Description

La présente invention relève du domaine de la direction de véhicule terrestre, en particulier de véhicules automobiles pourvus d'un mécanisme de direction assistée ou d'une direction électrique.

De façon classique, les véhicules automobiles sont pourvus d'un châssis, d'un habitacle, de roues reliées au châssis par un mécanisme de suspension avec des roues avant directrices commandées par un volant à la disposition du conducteur dans l'habitacle du véhicule. Entre le volant et les roues, est prévue une colonne de direction solidaire en rotation du volant dont l'extrémité inférieure est pourvue d'un pignon agissant sur une crémaillère permettant de faire tourner les roues autour d'un axe sensiblement vertical, afin d'assurer leur orientation et la rotation du châssis du véhicule.

De tels mécanismes de direction peuvent être pourvus d'une assistance hydraulique ou électrique permettant de réduire les efforts du conducteur, en particulier lors de manoeuvres à l'arrêt, par exemple une manoeuvre de stationnement.

Plus récemment, sont apparues des directions électriques comprenant un capteur de la position angulaire du volant monté à distance d'un actionneur agissant sur la crémaillère en fonction de la position angulaire détectée par le capteur auquel il est relié par une liaison filaire.

Le document US A 5 884 724 décrit une direction à rapport de démultiplication variable, avec maintien d'un rapport de démultiplication constant pendant quelques instants lors d'une manoeuvre dynamique afin d'éviter de perturber le conducteur. La démultiplication peut être faible à basse vitesse pour faciliter la manoeuvre du véhicule que l'on cherche à garer.

Le document DE 41 20 069 (NISSAN) décrit un système de commande pour véhicule automobile comprenant un dispositif de stockage de donnés pour déterminer l'âge du conducteur, un groupe de capteur variés pour détecter le opérations effectuées par le conducteur et un système de commande qui estime une caractéristique du conducteur à partir d'informations fournies par les capteurs et qui modifie la caractéristique de réponse d'un ou plusieurs système de braquage, de freinage et d'accélération du véhicule pour le rendre plus facile à contrôler pour des conducteurs âgés ou inexpérimentés. Plus particulièrement il est prévu d'appliquer une avance de phase en fonction de l'âge du conducteur.

Toutefois, la demanderesse s'est aperçue qu'un perfectionnement judicieux des mécanismes de direction permettait en outre d'accroître la sécurité et d'améliorer la tenue de route du véhicule. Jusqu'à présent, l'amélioration de la tenue de route du véhicule était obtenue par un accroissement de la rigidité du châssis, une amélioration des pneumatiques ou encore un meilleur réglage des suspensions.

Or, le temps de retard entre l'action du conducteur sur le volant et la mise en virage du véhicule est variable d'un véhicule à l'autre. Dans certains cas de conduite, le temps de retard peut être préjudiciable, voire dangereux. Lors d'une manoeuvre d'évitement à vitesse moyenne, un conducteur d'entraînement moyen va donner un coup de volant brutal de forte amplitude. L'amplitude donnée par le conducteur est accrue si le conducteur sent que le véhicule ne tourne pas immédiatement. À ce moment, le véhicule commence à tourner et peut s'écarter significativement de la trajectoire désirée par le conducteur qui réagit en contre braquant pour remettre le véhicule en ligne. Le contre-braquage du conducteur peut encore être excessif. Le déphasage peut être dangereux à ce moment en rendant le véhicule instable par un phénomène d'antinomie entre les coups de volant et la réponse du véhicule.

L'invention vise à améliorer les caractéristiques dynamiques du véhicule par un mécanisme de direction perfectionné.

Le procédé d'aide au braquage de roues directrices de véhicule, selon un aspect de l'invention, comprend l'application d'une avance de phase entre un volant de direction et un élément de crémaillère afin de diminuer le temps de réponse du véhicule à une action du conducteur du véhicule sur ledit volant de direction. En effet, jusqu'à présent, le temps de réponse d'un véhicule à une action sur le volant était imposé par les cinématiques élastiques des trains et la dérive des pneumatiques. Le temps de réponse résultait d'un compromis entre la tenue de cap, la dynamique angulaire et la vivacité du véhicule en transitoire. Ainsi, le temps de réponse peut être caractérisé par le retard entre un coup de volant donné par le conducteur et la mise en virage du véhicule, en d'autres termes, la vitesse de lacet.

L'invention permet de réduire le temps de réponse afin de permettre des manoeuvres d'évitement plus élevées susceptibles d'accroître la sécurité.

Dans un mode de réalisation de l'invention, la vitesse de rotation et l'accélération angulaire du volant de direction sont mesurées ou estimées et une consigne de braquage de roues directrices est émise en fonction desdites vitesse de rotation et accélération angulaire. La consigne peut être élaborée par une unité de commande recevant en entrée lesdites vitesse de rotation et accélération angulaire.

Dans un mode de réalisation de l'invention, la vitesse de rotation et l'accélération angulaire du volant de direction peuvent être comparées à des seuils prédéterminés, une avance de phase étant appliquée en cas de dépassement de ces seuils. La consigne de braquage peut être calculée à partir de la vitesse de rotation du volant de direction, de l'accélération angulaire du volant de direction, et d'une avance temporelle. L'avance temporelle peut être comprise entre 10 et 100 millisecondes, préférablement entre 40 et 70 millisecondes, par exemple aux environs de 60 millisecondes.

Dans un autre mode de réalisation de l'invention, l'avance de phase est calculée à partir de l'angle de braquage des roues directrices et d'une avance temporelle. L'avance temporelle peut être calculée à partir de l'angle du volant de direction. L'avance de phase peut être égale à la somme du produit de l'avance temporelle par la vitesse de rotation et du demi produit du carré de l'avance temporelle par l'accélération angulaire.

La relation entre l'angle du pignon de crémaillère et l'angle du volant dépend de la démultiplication qui peut être variable. Le rapport de démultiplication peut se décomposer en un gain statique correspondant à la démultiplication en situation quasi statique et une phase correspondant à une cinématique élastique supplémentaire sur la colonne de direction. Au retard dû à cette phase, s'ajoute le temps de réponse du châssis. Le temps de réponse du châssis est imposé par la mécanique des trains. Au contraire, le temps de réponse entre le volant et le pignon est modifié par application d'une phase négative, de façon que le temps de réponse global soit inférieur au temps de réponse dû à la mécanique des trains. On crée ainsi une avance de phase entre le volant et le pignon.

L'invention propose également un système d'aide au braquage des roues directrices de véhicule, comprenant un moyen pour appliquer une avance de phase entre un volant de direction et un élément de crémaillère. On peut ainsi diminuer le temps de réponse du véhicule à une action du conducteur du véhicule sur le volant de direction.

Avantageusement, le système comprend un capteur de paramètres de rotation du volant de direction. Le capteur peut être de type optique ou encore magnétique, par exemple à effet Hall.

Avantageusement, le moyen pour appliquer une avance de phase comprend une unité de commande recevant en entrée des paramètres de rotation du volant de direction, et pourvue d'un moyen de calcul pour calculer une avance de phase en fonction de paramètres de rotation du volant de direction.

Avantageusement, le système comprend une unité de commande apte à appliquer une avance de phase en fonction de paramètres de rotation du volant de direction et un actionneur apte à déplacer la crémaillère de direction, notamment en réponse à un ordre provenant de l'unité de commande.

Dans un mode de réalisation de l'invention, le moyen pour appliquer une avance de phase comprend un moyen pour calculer une avance temporelle en fonction de paramètres angulaires du volant de direction, et un moyen pour calculer une consigne d'angle de braquage en fonction de paramètres angulaires de braquage des roues directrices et de l'avance temporelle. Le moyen pour calculer une consigne d'angle de braquage peut comprendre un dérivateur pour calculer la vitesse angulaire de braquage des roues du véhicule et l'accélération angulaire de braquage des roues du véhicule à partir de la position angulaire de braquage des roues du véhicule. Le moyen pour calculer une consigne d'angle de braquage peut comprendre un élément de calcul pour calculer la consigne d'angle de braquage à partir de la position angulaire de braquage des roues du véhicule, de la vitesse angulaire de braquage des roues du véhicule, de l'accélération angulaire de braquage des roues du véhicule et de l'avance temporelle.

Dans un mode de réalisation de l'invention, le moyen pour calculer une avance temporelle en fonction de paramètres angulaires du volant de direction comprend un élément de logique floue pour élaborer un indice de confiance et une table pour déduire de l'indice de confiance une avance temporelle. En outre, le moyen pour calculer une avance temporelle peut comprendre un dérivateur pour calculer la vitesse angulaire et l'accélération angulaire à partir de la position angulaire du volant de direction.

L'invention propose également un véhicule comprenant un châssis, au moins trois roues dont une roue directrice et un système d'aide au braquage de roues directrices de véhicule pourvu d'un moyen pour appliquer une avance de phase entre un volant de direction et un élément de crémaillère pour diminuer le temps de réponse du véhicule à une action du conducteur sur le volant de direction.

Le véhicule peut comprendre une direction électrique, ou encore une direction assistée électrique ou encore une direction assistée hydraulique.

Un essai a montré qu'un véhicule équipé de l'aide au braquage des roues directrices était susceptible de franchir une chicane à une vitesse de 75 km/h au lieu de 72 km/h pour le même véhicule dépourvu d'aide au braquage des roues directrices. Cet accroissement à la vitesse de passage se traduit dans des situations de conduite normales par une sécurité accrue permettant de réduire le nombre d'accidents engageant un autre véhicule, un deux-roues ou encore un piéton.

La présente invention sera mieux comprise à la lecture de la description détaillée d'un mode de réalisation pris à titre d'exemple nullement limitatif et illustré par les dessins annexés, sur lesquels:
- la figure 1 est une vue schématique de dessus d'un véhicule équipé du système d'aide au braquage selon un aspect de l'invention;
- la figure 2 est un organigramme simplifié du fonctionnement dynamique du véhicule;
- la figure 3 est un schéma logique du fonctionnement d'une direction de véhicule; et
- la figure 4 montre un organigramme selon un autre mode de réalisation de l'invention.

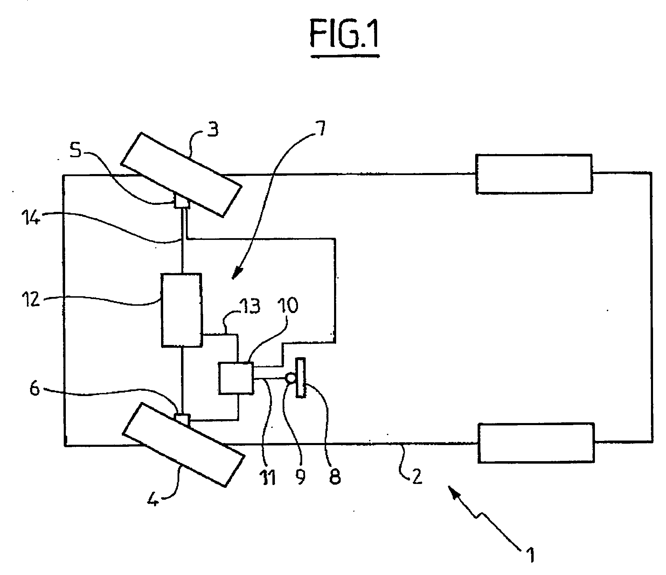

Comme on peut le voir sur la figure 1, le véhicule 1 comprend un châssis 2, deux roues avant directrices 3 et 4 et deux roues arrière, les roues étant reliées au châssis 2 par un mécanisme de suspension non représenté. Chaque roue avant 3, 4 est équipée d'un capteur 5, 6 de la position angulaire de ladite roue avant 3, 4. Le véhicule 1 se complète par un système de direction 7 comprenant un volant 8 disposé dans un habitacle, non représenté, du véhicule 1, un capteur 9 de la position angulaire du volant 8, une unité centrale 10 reliée par une liaison filaire 11 au capteur 9 pour recevoir les informations relatives à la position angulaire du volant 9, un actionneur 12 relié par une liaison filaire 13 à l'unité centrale 10 pour recevoir des ordres de l'unité centrale 10 et une crémaillère 14 reliant l'actionneur 12 aux roues directrices 3 et 4. L'unité centrale 10 est également reliée aux capteurs 5 et 6 pour connaître l'angle de braquage α(t) des roues avant. L'angle de braquage α(t) peut être égal à la moyenne des angles α₅(t) et α₆(t) mesurés par les capteurs 5 et 6

Le capteur 9 est capable de détecter des paramètres de rotation du volant de direction, par exemple l'angle α. Le capteur peut être de type optique ou encore magnétique, par exemple à effet Hall, coopérant avec un codeur solidaire angulairement de la colonne de direction alors que le capteur est non tournant.

L'unité centrale 10 peut être réalisée sous la forme d'un circuit dédié, par exemple de type ASIC, ou d'un microcontrôleur équipé d'au moins une mémoire et permettant, à partir des informations reçues en provenance du capteur 9, de calculer la vitesse angulaire α̇ et l'accélération angulaire α̈ du volant 8.

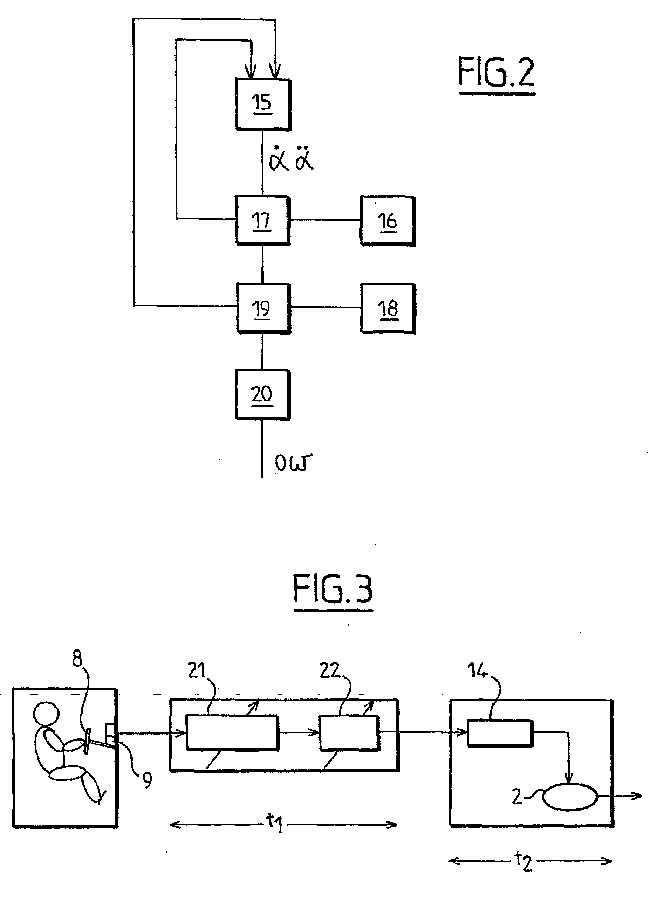

Comme illustré sur la figure 2, le calcul de la vitesse angulaire α̇ et de l'accélération angulaire α̈ du volant 8 est effectué à l'étape 15. À l'étape 16, qui peut être effectuée en même temps que l'étape 15, l'unité centrale extrait un seuil de vitesse de la mémoire et l'étape 17 effectue une comparaison entre le seuil de vitesse et la vitesse angulaire α̇ calculée à l'étape 15. Si la vitesse angulaire calculée α̇ est inférieure au seuil, alors l'unité centrale recommence l'étape 15. Si la vitesse angulaire calculée α̇ est supérieure au seuil, alors on passe à l'étape 19.

L'étape 18, qui peut être effectuée simultanément aux étapes 16 et 17, consiste pour l'unité centrale à prendre un seuil d'accélération angulaire dans la mémoire. À l'étape 19, l'unité centrale effectue une comparaison entre l'accélération angulaire α̈ calculée à l'étape 15 et le seuil d'accélération extrait de la mémoire à l'étape 18. Si l'accélération angulaire α̈ calculée est inférieure au seuil, alors l'unité centrale recommence l'étape 15. Au contraire, si l'accélération angulaire α̈ calculée est supérieure au seuil, alors l'unité centrale passe à l'étape 20. On comprendra que l'ordre dans lequel sont effectuées les étapes 17 et 19 peut être inversé. À l'étape 20, l'unité centrale effectue un calcul de l'avance temporelle t₁ à appliquer par l'actionneur 12 compte tenu du dépassement des deux seuils et de la valeur de la vitesse angulaire α̇ et de l'accélération angulaire α̈. La consigne α_{c} d'angle de braquage de la roue peut être exprimé de la façon suivante: α_{c}(t) = α(t) + t₁ α̇(t) + t₁² α̈(t)/2. La consigne α_{c} à appliquer est ensuite envoyée à l'actionneur 12 par la liaison filaire 13. L'avance de phase ϕ exprimée en unités d'angle vaut: ϕ = t₁ α̇ (t) + t₁² α̈(t)/2. L'avance temporelle exprimée en unités de temps est t₁.

À titre de variante, on peut prévoir que l'unité centrale 10 soit pourvue d'une cartographie permettant de déterminer une valeur d'avance de phase en fonction de la vitesse angulaire α̇ et de l'accélération angulaire α̈. La cartographie prévoit alors une avance de phase nulle en cas de vitesse angulaire α̇ ou d'accélération angulaire α̈ inférieure à l'un desdits seuils précités.

Sur la figure 3, est illustré le fonctionnement d'une direction de véhicule. Un conducteur agit sur un volant 8 pourvu d'un capteur de paramètres de déplacement 9. La liaison entre le volant 8 et la crémaillère 14 est caractérisée par un gain 21 et une phase 22 se traduisant par un retard t₁ dans le cas d'une direction classique. Les caractéristiques du châssis 2 et des roues 3 à 6 se traduisent par un retard t₂ avant que la vitesse de lacet du châssis 2 ne se modifie. L'unité centrale 10 permet donc d'agir sur la phase 22 en appliquant une phase négative t₁ permettant de réduire le temps de réponse de façon que le temps de réponse global devienne inférieur à t₂.

L'avance t₁ peut être de l'ordre de 60 millisecondes pour un véhicule présentant un retard t₂ de l'ordre de 140 millisecondes. Plus généralement, l'avance t₁ peut être comprise entre 10 et 100 millisecondes, préférablement entre 40 et 70 millisecondes.

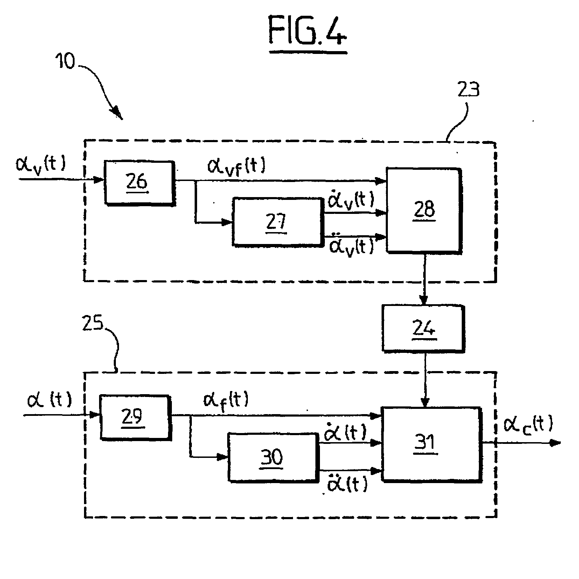

Dans le mode de réalisation illustré sur la figure 4, l'unité centrale 10 comprend un module 23 de détection de situation, une table 24 et un module 25 de calcul de l'angle de consigne α_{c}(t). Le module 23 de détection de situation comprend un filtre 26, un dérivateur 27, et un élément de logique floue 28. Le module 23 de détection de situation reçoit en entrée l'angle de volant αᵥ(t) mesuré par le capteur 9. Le filtre 26 effectue un filtrage de l'angle de volant αᵥ(t) et fournit un angle filtré de volant α_{vf}(t) au dérivateur 27, et à l'élément de logique floue 28. Le dérivateur 27 calcule la vitesse α̇ᵥ(t) et l'accélération α̈ᵥ(t) angulaires du volant. L'élément de logique floue 28 reçoit l'angle filtré de volant α_{vf}(t), la vitesse α̇ᵥ(t) et l'accélération α̈ᵥ(t) angulaires du volant, et calcule un indice de confiance de situation hᵤ.envoyé en sortie du module 23 de détection de situation vers la table 24.

La table 24 lie l'indice de confiance de situation hᵤ à une avance temporelle t₁ envoyée en sortie de ladite table 24 vers le module 25 de calcul de l'angle de consigne α_{c}(t). Le module 25 reçoit en entrée l'avance temporelle t₁ et l'angle de braquage α(t) des roues avant.

Le module 25 de calcul de l'angle de consigne α_{c}(t) comprend un filtre 29, un dérivateur 30, et un élément de calcul 31. Le filtre 29 effectue un filtrage de l'angle de braquage α(t) et fournit un angle filtré de braquage α_{f}(t) au dérivateur 30, et à l'élément de calcul 31. Le dérivateur 30 calcule la vitesse α̇(t) et l'accélération α̈(t) angulaires de braquage. L'élément de calcul 31 calcule l'angle de consigne de braquage α_{c}(t) =α_{f}(t) + t₁ α̇ (t) + t₁² α̈(t)/2.

L'élément de logique floue permet une adaptation à différentes situations, notamment en augmentant le nombre de lois floues et/ou d'entrées dudit élément. L'avance temporelle est donc de valeur adaptée aux circonstances. On peut prévoir de tenir compte de la vitesse du véhicule, et d'autres variables.

L'invention permet donc d'améliorer le comportement d'un véhicule au passage d'une chicane. Des essais ont montré une dérive au centre de gravité du véhicule réduite de plus de 30% et des angles des vitesses de rotation du volant réduits de l'ordre de 50%. Ainsi, le véhicule équipé de l'aide au braquage est plus réactif avec des amplitudes d'angles au volant réduites et se contrôle plus aisément avec des angles de dérive inférieurs.

L'invention s'applique aux véhicules légers, aux poids lourds y compris à essieux directeurs multiples, aux véhicules à trois roues, aux engins de travaux publics ou agricoles ou encore aux engins chenillés.

## Revendications

1. Procédé d'aide au braquage de roues directrices (3 et 4) de véhicule (1), dans lequel une avance de phase (ϕ) est appliquée entre un volant de direction (8) et un élément de crémaillère (14) afin de diminuer le temps de réponse du véhicule à une action du conducteur du véhicule sur ledit volant de direction, la vitesse de rotation (α̇) et l'accélération angulaire (α̈) du volant de direction étant mesurées ou estimées et une consigne de braquage de roues directrices étant émise en fonction desdites vitesse de rotation et accélération angulaire.

2. Procédé selon la revendication 1, dans lequel la vitesse de rotation (α̇) et l'accélération angulaire (α̈) du volant de direction (8) sont comparées à des seuils prédéterminés, une avance de phase étant appliquée en cas de dépassement desdits seuils.

3. Procédé selon l'une quelconque des revendications précédentes, dans lequel la consigne de braquage est calculée à partir de l'angle de braquage des roues directrices et d'une avance temporelle.

4. Procédé selon la revendication 3, dans lequel l'avance temporelle est calculée à partir de l'angle du volant de direction.

5. Système d'aide au braquage de roues directrices de véhicule (1), comprenant un moyen pour appliquer une avance de phase entre un volant de direction (8) et un élément de crémaillère (14), **caractérisé par le fait que** ledit moyen comprend un moyen de mesure ou d'estimation de la vitesse de rotation (α̇) et de l'accélération angulaire (α̈) du volant de direction et un moyen pour émettre une consigne de braquage de roues directrices en fonction desdites vitesse de rotation et accélération angulaire.

6. Système selon la revendication 5, **caractérisé par le fait qu'**il comprend un capteur (9) de paramètres de rotation du volant de direction (8).

7. Système selon la revendication 5 ou 6, **caractérisé par le fait que** le moyen pour appliquer une avance de phase comprend une unité de commande (10) recevant en entrée des paramètres de rotation du volant de direction (8), et pourvue d'un moyen de calcul pour calculer une avance de phase en fonction de paramètres de rotation du volant de direction (8).

8. Système selon l'une quelconque des revendications 5 à 7, **caractérisé par le fait que** le moyen pour appliquer une avance de phase comprend un moyen pour calculer une avance temporelle en fonction de paramètres angulaires du volant de direction, et un moyen (25) pour calculer une consigne d'angle de braquage en fonction de paramètres angulaires de braquage des roues directrices et de l'avance temporelle.

9. Système selon la revendication 8, **caractérisé par le fait que** le moyen pour calculer une avance temporelle en fonction de paramètres angulaires du volant de direction comprend un élément de logique floue (28) pour élaborer un indice de confiance et une table (24) pour déduire de l'indice de confiance une avance temporelle.

## Claims

1. Method of assisting the steering of steered wheels (3 and 4) of a vehicle (1), in which a phase advance (ϕ) is applied between a steering wheel (8) and a rack element (14) so as to decrease the response time of the vehicle to an action of the driver of the vehicle on said steering wheel, the speed of rotation (α̇) and the angular acceleration (α̈) of the steering wheel being measured or estimated and a steered wheels steering preset being emitted as a function of said speed of rotation and angular acceleration.

2. Method according to Claim 1, in which the speed of rotation (α̇) and the angular acceleration (α̈) of the steering wheel (8) are compared with predetermined thresholds, a phase advance being applied in case of overshoot of said thresholds.

3. Method according to either of the preceding claims, in which the steering preset is calculated on the basis of the angle of steer of the steered wheels and of a temporal advance.

4. Method according to Claim 3, in which the temporal advance is calculated on the basis of the angle of the steering wheel.

5. System for assisting the steering of steered wheels of a vehicle (1), comprising a means for applying a phase advance between a steering wheel (8) and a rack element (14), **characterized in that** said means comprises a means for measuring or estimating the speed of rotation (α̇) and the angular acceleration (α̈) of the steering wheel and a means for emitting a steered wheels steering preset as a function of said speed of rotation and angular acceleration.

6. System according to Claim 5, **characterized in that** it comprises a sensor (9) of parameters of rotation of the steering wheel (8).

7. System according to Claim 5 or 6, **characterized in that** the means for applying a phase advance comprises a control unit (10) receiving as input, parameters of rotation of the steering wheel (8), and provided with a means of calculation for calculating a phase advance dependent on parameters of rotation of the steering wheel (8).

8. System according to any one of Claims 5 to 7, **characterized in that** the means for applying a phase advance comprises a means for calculating a temporal advance as a function of angular parameters of the steering wheel, and a means (25) for calculating a steer angle preset as a function of angular parameters of steering of the steered wheels and of the temporal advance.

9. System according to Claim 8, **characterized in that** the means for calculating a temporal advance as a function of angular parameters of the steering wheel comprises a fuzzy logic element (28) for formulating a confidence index and a table (24) for deducing a temporal advance from the confidence index.

## Patentansprüche

1. Lenkhilfeverfahren für gelenkte Räder (3 und 4) eines Fahrzeugs (1), bei dem eine Phasenvoreilung (ϕ) zwischen einem Lenkrad (8) und einem Zahnstangenelement (14) angewendet wird, um die Reaktionszeit des Fahrzeugs auf eine Aktion des Fahrers des Fahrzeugs auf das Lenkrad zu verkürzen, wobei die Drehgeschwindigkeit (α̇) und die Winkelbeschleunigung (α̈) des Lenkrads gemessen oder geschätzt werden und ein Lenksollwert der gelenkten Räder in Abhängigkeit von der Drehgeschwindigkeit und der Winkelbeschleunigung ausgegeben wird.

2. Verfahren nach Anspruch 1, bei dem die Drehgeschwindigkeit (α̇) und die Winkelbeschleunigung (α̈) des Lenkrads (8) mit vorbestimmten Schwellwerten verglichen werden, wobei im Fall einer Überschreitung der Schwellwerte eine Phasenvoreilung angewendet wird.

3. Verfahren nach einem der vorhergehenden Ansprüche, bei dem der Lenksollwert ausgehend vom Lenkwinkel der gelenkten Räder und einer zeitlichen Voreilung berechnet wird.

4. Verfahren nach Anspruch 3, bei dem die zeitliche Voreilung ausgehend vom Winkel des Lenkrads berechnet wird.

5. Lenkhilfesystem für gelenkte Räder eines Fahrzeugs (1), das eine Einrichtung zum Anwenden einer Phasenvoreilung zwischen einem Lenkrad (8) und einem Zahnstangenelement (14) aufweist, **dadurch gekennzeichnet, dass** die Einrichtung eine Mess- oder Schätzeinrichtung der Drehgeschwindigkeit (α̇) und der Winkelbeschleunigung (α̈) des Lenkrads und eine Einrichtung zum Ausgeben eines Lenksollwerts von gelenkten Rädern in Abhängigkeit von der Drehgeschwindigkeit und der Winkelbeschleunigung aufweist.

6. System nach Anspruch 5, **dadurch gekennzeichnet, dass** es einen Sensor (9) für die Drehparameter des Lenkrads (8) aufweist.

7. System nach Anspruch 5 oder 6, **dadurch gekennzeichnet, dass** die Einrichtung zum Anwenden einer Phasenvoreilung eine Steuereinheit (10) aufweist, die am Eingang Drehparameter des Lenkrads (8) empfängt, und mit einer Recheneinrichtung versehen ist, um eine Phasenvoreilung in Abhängigkeit von Drehparametern des Lenkrads (8) zu berechnen.

8. System nach einem der Ansprüche 5 bis 7, **dadurch gekennzeichnet, dass** die Einrichtung zum Anwenden einer Phasenvoreilung eine Einrichtung, um eine zeitliche Voreilung in Abhängigkeit von Winkelparametern des Lenkrads zu berechnen, und eine Einrichtung (25) aufweist, um einen Lenkwinkelsollwert in Abhängigkeit von Lenkwinkelparametern der gelenkten Räder und der zeitlichen Voreilung zu berechnen.

9. System nach Anspruch 8, **dadurch gekennzeichnet, dass** die Einrichtung, um eine zeitliche Voreilung in Abhängigkeit von Winkelparametern des Lenkrads zu berechnen, ein Fuzzylogik-Element (28), um einen Vertrauensindex zu erarbeiten, und eine Tabelle (24) aufweist, um aus dem Vertrauensindex eine zeitliche Voreilung abzuleiten.
